# EUROPEAN PATENT APPLICATION

(11) **EP 3 342 369 A1**
(43) Date of publication of application: **04.07.2018**
(21) Application number: 16839638.0
(22) Date of filing: 25.08.2016
(51) Int. Cl.: A61C 8/00

(54) **EASILY RETRIEVABLE IMPLANT-ABUTMENT DEVICE**

(30) Priority: 25.08.2015 KR 20150119807; 02.03.2016 KR 20160024846; 28.04.2016 KR 20160052478
(71) Applicant: Acrodent Co., Ltd, Gimhae-si, Gyeongsangnam-do 50965 (KR)
(72) Inventor: LEE, Jun Ho, Geoje-si Gyeongsangnam-do 53237 (KR)
(74) Representative: Zardi, Marco
(86) International application number: PCT/KR2016/009457
(87) International publication number: WO 2017/034350

(57) **Abstract**

Disclosed herein is an implant-abutment, including: a fixture that is coupled to an alveolar bone and includes a female tapered part having a tapered shape on an inside thereof; an abutment, one side of which includes a male tapered part corresponding to a shape of the female tapered part so as to be interlocked and coupled to the female tapered part, and, the other side of which is coupled to a dental prosthesis; and an elastic part that is provided between the female tapered part and the male tapered part so as for the abutment to be movable between a locking position, in which the abutment stays coupled to the fixture and is inhibited from moving away from the alveolar bone, and a sinking position, in which the abutment moves and sinks towards the alveolar bone by an occlusal force of occluding teeth.

According to embodiments of the present disclosure, provided is an easily retrievable implant-abutment device that is not only capable of maintaining a position in a state where an abutment is coupled to a fixture, but also capable of allowing a slight movement under a predetermined external force occurring due to an occlusal force of occluding teeth, and further in which, as necessary, the abutment is able to be separated from the fixture when an external force that is equal to or greater than a target coupling force for maintaining a coupled state therebetween is exerted.

## Description

### BACKGROUND OF THE DISCLOSURE

### 1. Field of the Disclosure

The present disclosure relates to an easily retrievable implant-abutment device, and more particularly, to an easily retrievable implant-abutment device that is not only capable of maintaining a coupled position in a state where an abutment is coupled to a fixture, but also capable of retrievably coupling the abutment into the fixture.

### 2. Description of the Related Art

Recently, an implant surgery procedure for replacing damaged teeth or missing teeth has been generalized. Such an implant surgery method performs a series of processes in which an alveolar bone is drilled and a fixture is implanted into the alveolar bone, after which an abutment is coupled to the fixture and lastly a dental prosthesis is fixed to the abutment.

Provided are widely well-known methods in which the abutment is coupled to the fixture as follows: a coupling type in which the abutment is coupled to the fixture by a screw, and the like as a first method; and a locking type in which the abutment and the fixture are coupled to with each other by using a frictional force occurring when coupled to each other at a predetermined angular range as a second method.

In the case of the coupling type (or a screw type), two pieces separately formed with the abutment and the fixture are generally provided, thereby having a considerable convenience. However, bacteria may be propagated around a coupled portion, or coupling means such as a screw, and the like may be released or broken. To prevent the above-mentioned drawbacks, an integral-type implant including the fixture and abutment has been recently released. However, the integral-type implant requires a long procedure time such that it causes inconvenience. Further, it may be difficult to produce the integral-type implant in consideration of various diameters, lengths, and angles, all of which are individually required by users. Accordingly, the use thereof may be limited.

Next, the locking type is provided without using a screw, thereby having an effect of maintaining a high coupling force based upon a tapered shape. More specifically, the locking type is provided based upon a locking taper method to which a cold-welding principle, in which a propeller generating a driving force of a ship is engaged to a thrust shaft of an engine, is applied. An internal screw is not provided in the aforementioned method, thereby having no drawbacks such as screw loosening, screw fractures, and the like. When the fixture and abutment are not accurately coupled to each other in this method, the abutment falls out, thereby having an advantage of preventing bacteria from being stuck or being propagated between the abutment and the fixture. However, when accurately coupled to each other, the abutment and the fixture may be hardly separated from each other.

Meanwhile, after the implant surgery procedure is performed, the dental prosthesis is required to be retrievable, that is to say required to be removable or detachable, for its maintenance such that it is desirable to have retrievability. In other words, as necessary, a surgeon may separate the dental prosthesis and/or the abutment from the fixture, and, normally, a stably coupled state therebetween should be maintained. Further, after the implant surgery procedure is performed, the abutment may move and sink (that is to say abutment sinking) towards the fixture, very slightly, for example, from several to serval tens of *µ*m due to an occlusal force of occluding teeth.

Accordingly, proposed herein is an elastic coupling type in which the abutment may sink towards the fixture, and the abutment and the fixture are separated from each other and are retrievable therebetween. In other words, it is desirous that a target coupling force of the abutment with respect to the fixture may be maintained in a normal coupled state, and further the abutment and the fixture may be easily separated from each other when an external force that is equal to or greater than the target coupling force is exerted.

An example of such a conventional technology is disclosed in Korean Patent Laid-Open Publication No. 10-2014-0130773 (Published on November 12, 2014). However, in the case of this conventional technology, an elastic body is provided between a dental prosthesis and an abutment, such that the dental prosthesis may be easily broken or may not be stably fixed thereto due to a movement of the dental prosthesis, stiffness of which is relatively weak.

Another conventional technology is also disclosed in Korean Patent Laid-Open Publication No. 10-2015-0072363 (Published on June 26, 2015). According to the conventional technology, a spring elastic part or a coupling protrusion is provided in a lower portion of an abutment. However, in this case, a foreign substance or bacteria, and the like may get stuck or propagated between the abutment and the fixture, and a complicated structure thereof may be required to be produced.

Further, according to a conventional technology disclosed in Korean Patent No. 10-1386560 (Published on April 17, 2014), an upper portion of an abutment is formed based upon a elastically deformable structure. However, the conventional technology has drawbacks in that a fixture and the abutment are coupled to each other by using a screw, and the elastically deformable structure is so complicated that a plurality of components are required.

The above information disclosed in this Background section is only for enhancement of understanding of the background of the disclosure and therefore it may contain information that does not form the prior art that is already known to a person of ordinary skill in the art.

### SUMMARY OF THE DISCLOSURE

### TECHNICAL PROBLEM

The present disclosure has been made in an effort to provide an easily retrievable implant-abutment device that is not only capable of maintaining a coupled position in a state where an abutment is coupled to a fixture, but also capable of maintaining a coupled state even in a state where the abutment sinks slightly deeper towards the fixture under a predetermined external force (that is to say when a force, lower than a predetermined external force, is exerted) occurring due to an occlusal force of occluding teeth.

Further, the present disclosure has been made in an effort to provide the easily retrievable implant-abutment device that is capable of separating the abutment from the fixture as necessary when the external force that is equal to or greater than a target coupling force for maintaining the fixture and abutment is exerted.

Further, the present disclosure has been made in an effort to provide the easily retrievable implant-abutment device that is capable of improving economic efficiency by simplifying a structure thereof and by saving components thereof.

Additionally, the present disclosure has been made in an effort to provide the easily retrievable implant-abutment device that is capable of easily replacing an implant dental prosthesis, thereby having an effect of improving convenience and reliability for a patient and/or a surgeon.

Additionally, the present disclosure has been made in an effort to provide the easily retrievable implant-abutment device that is capable of maintaining a coupled state between the fixture and the abutment without a movement occurring due to a shock-absorbing action therebetween, thereby having an advantage of preventing bacteria, germs, and the like from being stuck or being propagated between the abutment and the fixture.

### TECHNICAL SOLUTION

An exemplary embodiment of the present disclosure provides an elastically coupled implant-abutment device, including: a fixture that is coupled to an alveolar bone and includes a female tapered part having a tapered shape on an inner side thereof; an abutment, one side of which includes a male tapered part corresponding to a shape of the female tapered part so as to be interlocked and coupled to the female tapered part, and, the other side of which is coupled to a dental prosthesis; and an elastic part that is provided between the female tapered part and the male tapered part so as for the abutment to be movable between a locking position, in which the abutment stays coupled to the fixture and is inhibited from moving away from the alveolar bone, and a sinking position, in which the abutment moves and sinks towards the alveolar bone by an occlusal force of occluding teeth.

Further, the elastic part may include an elastic member, a shape of which is elastically deformable in a coupling process between the fixture and the abutment; an elastic member coupling groove that is formed so as for the elastic member to be elastically and deformably coupled to one of the female tapered part and the male tapered part; and an elastic member groove that is formed in the other of the female tapered part and the male tapered part so as for the elastic member to be movable between the locking position and the sinking position.

Further, the elastic part may include a ring shape.

Additionally, the elastically coupled implant-abutment device may include rotation preventing parts that are formed in portions where the female tapered part and the male tapered part are provided or in portions extended from the portions where the female tapered part and the male tapered part are provided so as to inhibit rotation in a state where the abutment is coupled to the fixture.

Meanwhile, another exemplary embodiment of the present invention provides an elastically coupled implant-abutment device, including: a fixture that is coupled to an alveolar bone and includes a female tapered part having a tapered shape on an inner side thereof; an abutment, one side of which includes a male tapered part corresponding to a shape of the female tapered part so as to be interlocked and coupled to the female tapered part, and, the other side of which is coupled to a dental prosthesis; rotation preventing parts that are formed in portions where the female tapered part and the male tapered part are provided or in portions extended from the portions where the female tapered part and the male tapered part are provided so as to inhibit rotation in a state where the abutment is coupled to the fixture; and an elastic part that is provided between the female tapered part and the male tapered part so as for the abutment to be movable between a locking position, in which the abutment stays coupled to the fixture and is inhibited from moving away from the alveolar bone, and a sinking position, in which the abutment moves and sinks towards the alveolar bone by an occlusal force of occluding teeth.

Yet another embodiment of the present disclosure provides an implant-abutment device including a fixture that is coupled to an alveolar bone and an abutment that is coupled to the fixture, including: an elastic part that is provided to be elastically and deformably coupled to a coupling part or a latching part, thereby inhibiting a movement of the abutment with respect to the fixture and maintaining a coupled state between the abutment and the fixture, wherein the fixture and the abutment may be contacted and coupled to each other at the coupling part and the latching part.

Further, a tapered shape may be provided in a portion where the coupling part and the latching part are contacted to each other, and the elastic part may be provided to maintain a sinking state in which the elastic part sinks slightly deeper in a downward direction when a force, by which the abutment is more closely adhered to the fixture, is exerted.

Further, the elastic part may include an elastic member that is capable of being elastically deformed, and the elastic member is configured not to be elastically deformed in a vertical direction, but to be elastically deformed in a horizontal direction by a force that is vertically exerted on the abutment.

Further, the elastic member may include a ring-shaped spring (a coil spring).

Additionally, the elastic member may include an elastically deformable shape (a "C" shape) that is formed in such a manner that a ring shape is partly cut.

Additionally, a cross section of the elastic member may include a circle shape, an oval shape, a teardrop shape or an irregular circle shape.

Additionally, a plurality of coupling types, by which the abutment is coupled to the fixture, may include a submerged type, an internal submerged type, and an external type.

Even another embodiment of the present disclosure provides an implant-abutment device including a fixture that is coupled to an alveolar bone and an abutment that is coupled to the fixture, including: an elastic part that is provided to be elastically and deformably coupled to a coupling part or a latching part, thereby inhibiting a movement of the abutment with respect to the fixture and maintaining a coupled state between the abutment and the fixture, wherein the fixture and the abutment are contacted and coupled to each other at the coupling part and the latching part, and the elastic part includes a coil spring having a ring shape that is provided to be elastically and deformably coupled to the coupling part and the latching part.

Still another embodiment of the present disclosure provides an implant-abutment device including a fixture that is coupled to an alveolar bone and an abutment that is coupled to the fixture, including an elastic part that is provided to be elastically and deformably coupled to a coupling part or a latching part, thereby inhibiting a movement of the abutment with respect to the fixture and maintaining a coupled state between the abutment and the fixture, wherein the fixture and the abutment are contacted and coupled to each other at the coupling part and the latching part, and the elastic part includes a plate spring that is elastically and deformably coupled to either one of the coupling part and the latching part; and a position maintaining means, provided in plural, including a ball that is coupled to the coupling part and the latching part to be retrievable on a circumference of the plate spring.

### EFFECTS OF THE DISCLOSURE

According to embodiments of the present disclosure, provided is an easily retrievable implant-abutment device that is not only capable of maintaining a coupled position in a state where an abutment is coupled to a fixture, but also capable of allowing a slight movement under a predetermined external force (that is to say when a force, lower than a predetermined external force, is exerted) occurring due to an occlusal force of occluding teeth, and further in which, as necessary, the abutment is able to be separated from the fixture when an external force that is equal to or greater than a target coupling force for maintaining a coupled state therebetween is exerted.

Further, it is advantageously possible to provide the easily retrievable implant-abutment device, a structure of which is simplified, that is not only capable of saving components and improving economic efficiency, but also capable of easily replacing an implant dental prosthesis, thereby having an effect of improving convenience and reliability for a patient and/or a surgeon.

Further, it is advantageously possible to provide the easily retrievable implant-abutment device that is capable of maintaining a coupled state between the fixture and the abutment without a movement occurring due to a shock-absorbing action therebetween, thereby having an advantage of preventing bacteria, germs, and the like from being stuck or being propagated between the abutment and the fixture.

### BRIEF DESCRIPTION OF THE DRAWINGS

FIG. 1 illustrates a cross-sectional view of an implant including an abutment device according to a first exemplary embodiment of the present disclosure.
FIG. 2 illustrates a separated cross-sectional view of main parts shown in FIG. 1.
FIGS. 3a and 3b illustrate schematic views describing a coupling process of an abutment device according to an exemplary embodiment of the present disclosure.
FIG. 3c illustrates a schematic view describing a coupling position of the abutment device and a sinking position thereof.
FIGS. 3d and 3e illustrate schematic views describing a separating process of the abutment device.
FIG. 4 illustrates a cross-sectional view describing a second exemplary embodiment of the present disclosure.
FIG. 5 illustrates a cross-sectional view describing a third exemplary embodiment of the present disclosure.
FIG. 6 illustrates a cross-sectional view of an implant including an abutment device according to a fourth exemplary embodiment of the present disclosure.
FIG. 7 illustrates a separated cross-sectional view of main parts shown in FIG. 6.
FIG. 8a illustrates a cross-sectional view describing a coupling process of an implant device according to an exemplary embodiment of the present disclosure.
FIG. 8b illustrates a cross-sectional view describing a coupling position of the implant device.
FIGS. 8c and 8d schematically illustrate cross-sectional views describing a separating process of the implant device.
FIG. 9 illustrates a cross-sectional view describing a fifth exemplary embodiment of the present disclosure.
FIG. 10 illustrates a cross-sectional view describing a sixth exemplary embodiment of the present disclosure.
FIGS. 11a and 11b illustrate cross-sectional views describing a seventh exemplary embodiment of an abutment device.
FIG. 12 illustrates a cross-sectional view describing an eighth exemplary embodiment of an abutment device.
FIGS. 13a and 13b are cross-sectional views illustrating a comparison between "before coupling" and "after coupling" according to a ninth exemplary embodiment of the present disclosure.
FIGS. 14a and 14b illustrate a cross-sectional view and a main section perspective view describing a tenth exemplary embodiment of the present disclosure.
FIG. 15 illustrates a cross-sectional view describing another exemplary embodiment of FIGS. 14a and 14b.

### DETAILED DESCRIPTION OF THE EMBODIMENTS

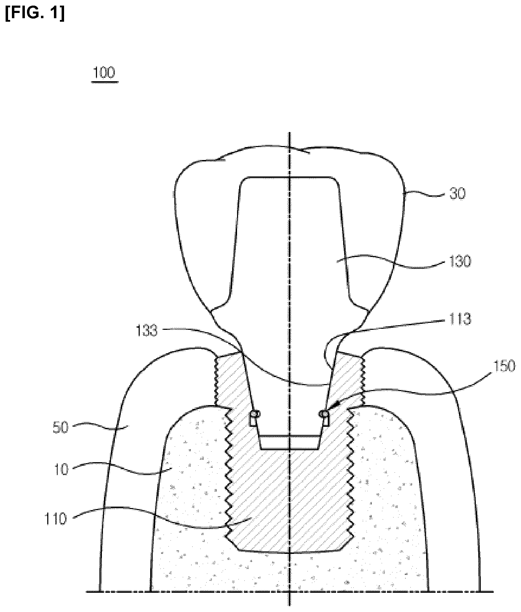

An easily retrievable implant-abutment device 100 (hereinafter referred to as an "implant device") according to exemplary embodiments of the present disclosure will be described more fully hereinafter with references to the accompanying drawings FIGS. 1 to 15, in which exemplary embodiments of the disclosure are shown.

### First exemplary embodiment

As shown in FIG. 1, an implant including the implant device 100 includes a fixture 110 that is coupled to an alveolar bone 10 and includes a female tapered part 113 having a tapered shape on an inner side thereof; a gum 50 that is exposed outwards from an upper side of the alveolar bone 10; an abutment 130 that is coupled to the fixture 110; and a dental prosthesis 30 or a crown that is coupled to the abutment 130 and then forms an outer shape, and has occlusion with occluding teeth, that is to say has contact between the occluding teeth.

One side of the abutment 130 includes a male tapered part 133, a shape of which corresponds to the female tapered part 113 so as to be interlocked and coupled to the female tapered part 113, and the other side thereof is coupled to the dental prosthesis 30.

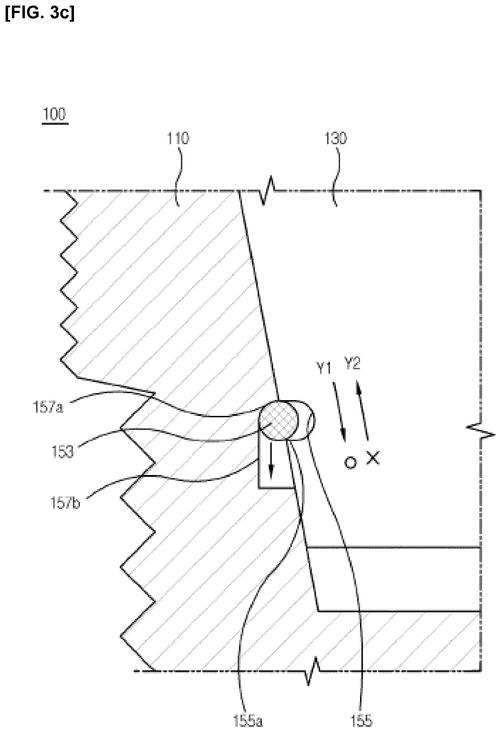

An elastic part 150 is provided between the female tapered part 113 and the male tapered part 133 so as for the abutment 130 to be movable between a locking position (refer to FIG. 3c), in which the abutment 130 stays coupled to the fixture 110 and is inhibited from moving away from the alveolar bone 10, and a sinking position (refer to an arrow mark at a lower side in FIG. 3c), in which the abutment 130 moves and sinks towards the alveolar bone 10 by an occlusal force of the occluding teeth.

The elastic part 150 is desirably provided with an elastic member 153, a shape of which is elastically deformable in a coupling process between the fixture 110 and the abutment 130; an elastic member coupling groove 155 that is formed so as for the elastic member 153 to be elastically and deformably coupled to one of the female tapered part 113 and the male tapered part 133; and an elastic member groove 157 that is formed in the other of the female tapered part 113 and the male tapered part 133 so as for the elastic member 153 to be movable between the locking position and the sinking position.

FIGS. 1 to 3c, as shown hereinafter, illustrate an examplary embodiment of the present disclosure in which the elastic member 153 is coupled to the fixture 110 at the locking position, the elastic member coupling groove 155 is formed in the abutment 130, and the elastic member groove 157 is formed in the fixture 110.

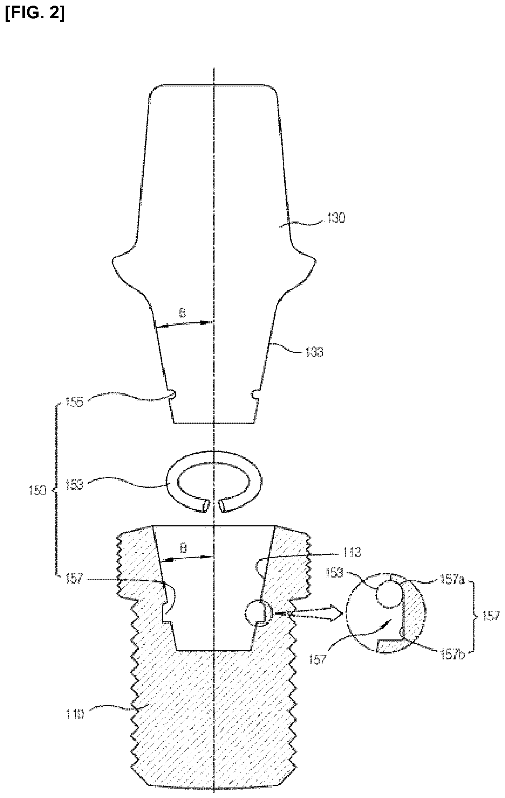

As shown in FIG. 2, the elastic member 153 may be provided with a ring or a loop, a cross section of which is a circle, and is desirably provided with a shape in which a circumference of the ring or the loop is not entirely connected but is partly cut. Further, it is desirable that the elastic member 153 has an elastic force to be adhered to the elastic member groove 157 of the fixture 110 in a coupling position. As necessary, a cross-sectional shape of the elastic member 153 may include various shapes such as an oval shape, and the like as well as a circle shape. A material of the elastic member 153 may include a shape-memory alloy or a permitted non-harmful material, and may be coated with the permitted non-harmful material.

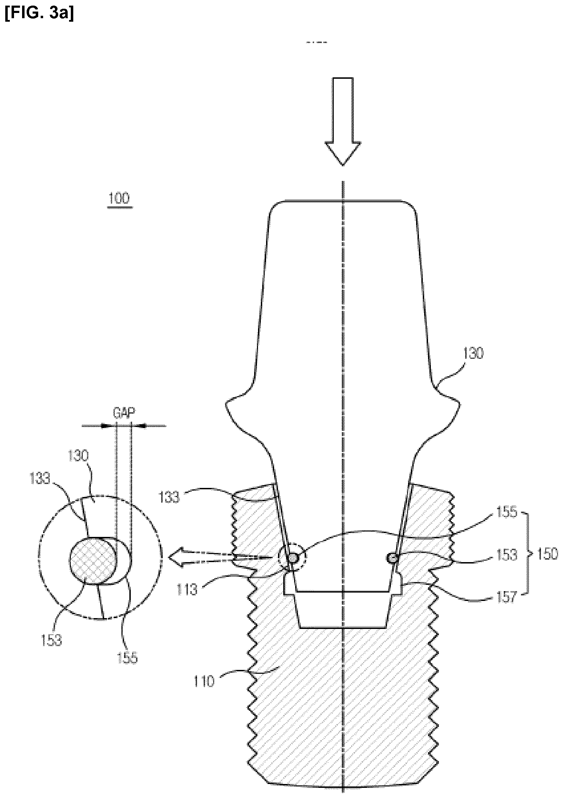

As described hereinafter, the elastic member coupling groove 155 is desirably formed to pass through a groove latch 157a in such a manner that the elastic member 153 is deformable to be shrunk towards an inner side of the elastic member coupling groove 155 in a coupling process between the fixture 110 and the abutment 130. In other words, according to the configuration described above, the elastic member 153 is elastically deformed and shrunk to a GAP size of an enlarged drawing shown in FIG. 3a, such that the elastic member 153 is able to pass through the groove latch 157a which is a narrowest portion. Further, a lower part of the elastic member coupling groove 155 is desirably provided with a groove latch 155a, onto which the elastic member 153 is latched, as well as a coupling force between the female tapered part 113 and the male tapered part 133 so as to maintain a coupled state between the abutment 130 and the fixture 110 at the locking position. As necessary, the groove latch 155a has a function of guiding the elastic member 153 to move towards the elastic member coupling groove 155 together with the groove latch 157a, which will be described later, by pressurizing the elastic member 153 to be shrunk inwards by an external force in a process of separating the abutment 130 from the fixture 110.

The elastic member groove 17 is desirably provided with the groove latch 157a formed in the fixture 110, a shape of which corresponds to a cross section of the elastic member 153 so as to maintain a coupling position of the elastic member 153 at the locking position; and a groove wall 157b extending towards a lower side of the groove latch 157a with the same diameter as an outer diameter of the groove latch 157a.

According to the configuration described above, an upper side of the elastic member 153 and an outer side thereof are adhered to the groove latch 157a of the elastic member groove 157, and a lower side of the elastic part 153 contacts the groove latch 155a, thereby maintaining the locking position of the abutment 130.

It is desirable to choose inclination angles of the female tapered part 113 and the male tapered part 133 (refer to B in FIG. 2) and accuracy thereof, a material of the elastic member 153, a diameter thereof, and a cross-sectional shape thereof, and a diameter of a ring thereof in consideration of a target coupling force for maintaining a locking state in which the fixture 110 is coupled to the abutment 130 at the locking position.

Since the locking state can be maintained by the elastic part 150, accuracy of the female tapered part 113 and the male tapered part 133 may be slightly decreased in comparison with a conventional technology in which high accuracy is required to be locked each other, thereby reducing a manufacturing cost more than a conventional locking type. Meanwhile, it is desirable to maintain a degree of accuracy at which bacteria, germs, and the like are prevented from being stuck or being propagated between the female tapered part 113 and the male tapered part 133.

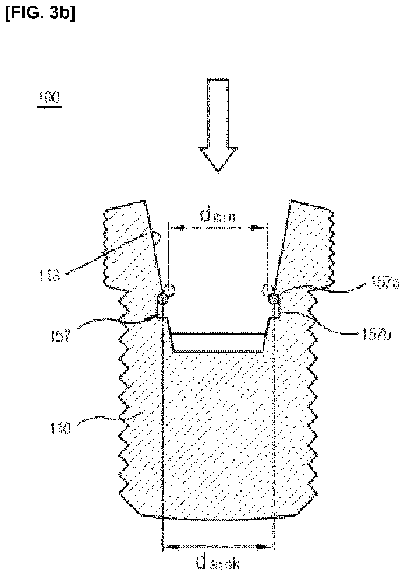

According to the configuration described above, a coupling process of the implant device 100 will now be described in detail with references to FIGS. 3a and 3b.

First, as shown in FIG. 3a, the fixture 110 is implanted into the alveolar bone 10, and the abutment 130 is pressurized to be coupled to the fixture 110, that is to say the abutment 130 is coupled to the fixture 110 by a pressurizing force, in a state where the elastic member 153 stays coupled to the coupling groove 155.

As shown in FIG. 3b, the elastic member 153 based upon a ring shape is elastically deformed and shrunk towards the inner side of the elastic member coupling groove 155 at the groove latch 157a which is the narrowest portion (refer to a dotted line and dmin in FIG. 3b) by the pressurizing force. Next, when the elastic member 153 moves more downwards and passes over the groove latch 157a, the elastic member 153 is coupled to the groove latch 157a (refer to a solid line and a dsink in FIG. 3b) while making a clicking sound by an elastic force having a tendency to extend towards an outer side of the elastic member 153, such that the elastic member 153 may maintain its position at the locking position. In other words, a portion facing from an upper end of the elastic member 153 to an outer-side end thereof contacts the groove latch 157a of the fixture 110, and a lower side thereof is coupled to the groove latch 155a of the abutment 130, based on which the locking position may be maintained (refer to FIG. 3c).

A process of a sinking action caused by an occlusal force of occluding teeth at the aforementioned locking position will now be described in detail with reference to FIG. 3c.

When an occlusal force (refer to Y1 in FIG. 3c) from the outside is exerted, the abutment 130 may move downwards with respect to the fixture 110. In this case, a movement amount of the abutment 130 may be very slight, ranging from several to serval tens of *µ*m. Since the elastic member 153, contrary to the conventional technology, is able to move downwards along the elastic member groove 157, the movement is able to be allowed. In other words, according to the present disclosure, the sinking action in which the abutment 130 moves and sinks downwards by the occlusal force of the occluding teeth may be performed.

Meanwhile, the abutment 130 is not separated from the fixture 110 by a coupling force between the female tapered part 113 and the male tapered part 133 as well as a locking action of the elastic member 153 under an external force (refer to an arrow mark Y2 in FIG. 3c) which is equal to or greater than a predetermined target coupling force and by which the abutment 130 and the fixture 110 are separable each other.

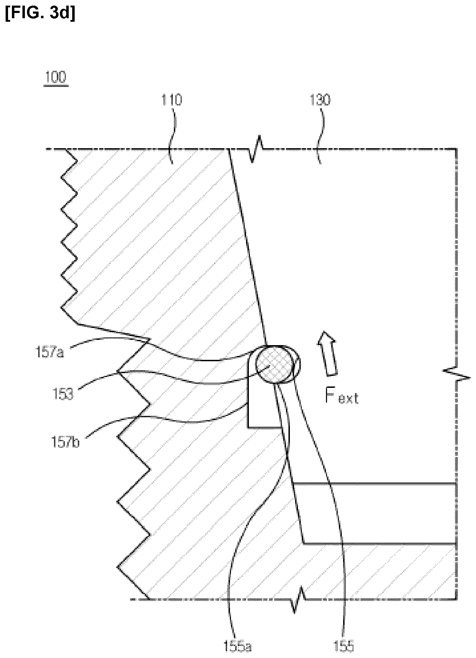

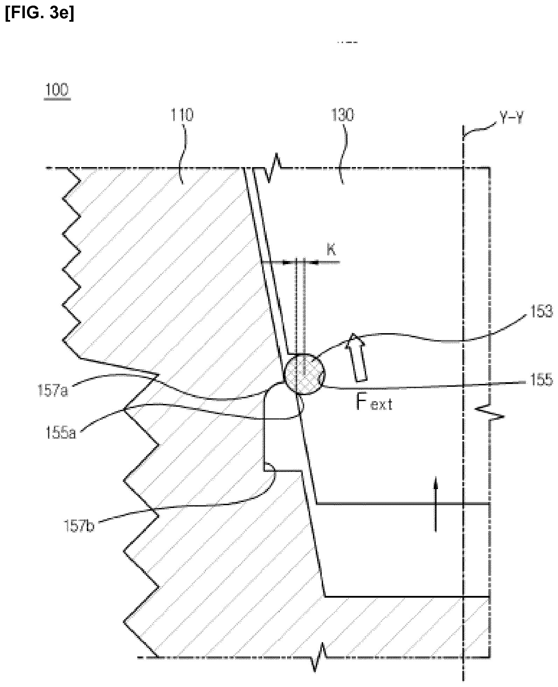

Next, a process of separating the abutment 130 from the fixture 110 will now be described in detail with references to FIGS. 3d and 3e.

When an external force (refer to F-ext in FIGS. 3d and 3e), by which the abutment 130 and the fixture 110 are separated from each other, is exerted, the groove latch 155a pressurizes the elastic member 153 in an upward direction, and the upper side of the elastic member 153 moves along the groove latch 157a and then the elastic member 153 can be guided to move to the elastic member coupling groove 155.

In this case, a position at which the groove latch 155a contacts the elastic member 153 at the locking position is desirably configured to be spaced apart towards an outer side (refer to K-K in FIG. 3e) from a central up-and-down axis of a cross section of the elastic member 153 (refer to Y-Y in FIG. 3e). As described above, at the portion facing from the upper end of the elastic member 153 to a most outer side thereof to be close to the upper end thereof, the portion facing the most outer side is configured to contact the groove latch 157a, a shape of which corresponds to a shape of the elastic member 153 having a circle shape, such that the elastic member 153 is able to be easily shrunk towards the inner side of the elastic member coupling groove 155 by the pressurizing force from the outside.

When the abutment 130 is lifted upwards by gradually pressurizing the force therefrom, as shown in FIG. 3e, the elastic member 153 is positioned in the elastic member coupling groove 155 of the abutment 130, thereby easily separating the abutment 130 from the fixture 110.

According to the present disclosure, it is advantageously possible not only to stably maintain a coupled state between a fixture and an abutment, but also to provide a sinking action caused by an occlusal force of occluding teeth. As necessary, it is also possible to provide an abutment device that is capable of being separated from the fixture when an external force that is equal to or greater than a target coupling force is exerted.

Further, it is advantageously possible to provide the abutment device, a structure of which is simplified, that is not only capable of saving components and improving economic efficiency, but also capable of easily replacing an implant dental prosthesis, thereby having an effect of improving convenience and reliability for a patient and/or a surgeon.

### Second Exemplary Embodiment

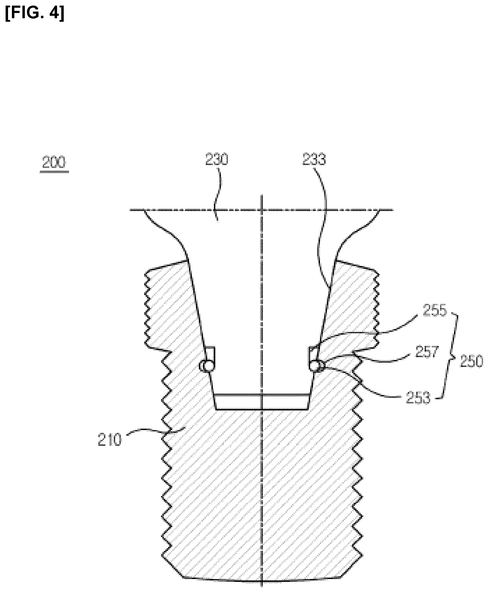

An implant device 200 according to another exemplary embodiment will now be described in detail with reference to FIG. 4. Additionally, reference numerals in one digit and two digits described hereinafter will be the same as those of the first exemplary embodiment describe hereinabove.

Contrary to the exemplary embodiment described above, an elastic member coupling groove 255 according to a second exemplary embodiment, to which an elastic member 253 is elastically and deformably coupled, is formed in a fixture 210, and an elastic member groove 257, in which the elastic member 253 is movable such that an sinking effect may occur, is formed in an abutment 230. In other words, the elastic member 253 is configured to be adhered to an inner diameter of the elastic member groove 257 at a locking position.

Functions, effects, actions, and the like of respective configurations except the configurations and positions described above in the second exemplary embodiment are the same as those in the exemplary embodiment described hereinabove, so detailed descriptions thereof will be omitted.

### Third Exemplary Embodiment

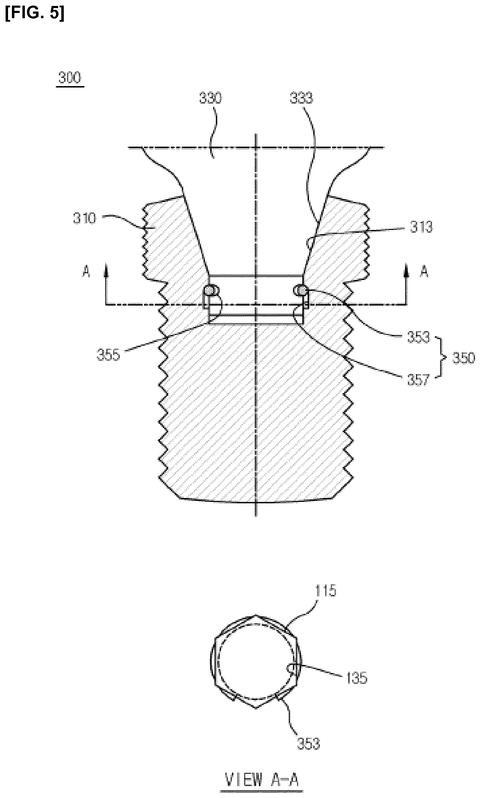

As shown in FIG. 5, an implant device 300 according to a third exemplary embodiment further includes rotation preventing parts 115 and 135 having hexagonal cross sections that are formed in portions where a female tapered part 313 and a male tapered part 333 are provided or in portions extended from the portions where the female tapered part 313 and the male tapered part 333 are provided so as to inhibit up-and-down rotation in a state where an abutment is coupled to a fixture, and an elastic part 350 is formed in the rotation preventing parts 115 and 135. Functions, effects, actions, and the like of respective configurations except the rotation preventing parts 115 and 135, and the elastic part 350 in the third exemplary embodiment are the same as those in the exemplary embodiments described hereinabove, so detailed descriptions thereof will be omitted.

As described above, the rotation preventing parts 115 and 135 may be also formed in the female tapered part 313 and the male tapered part 333.

### Fourth Exemplary Embodiment

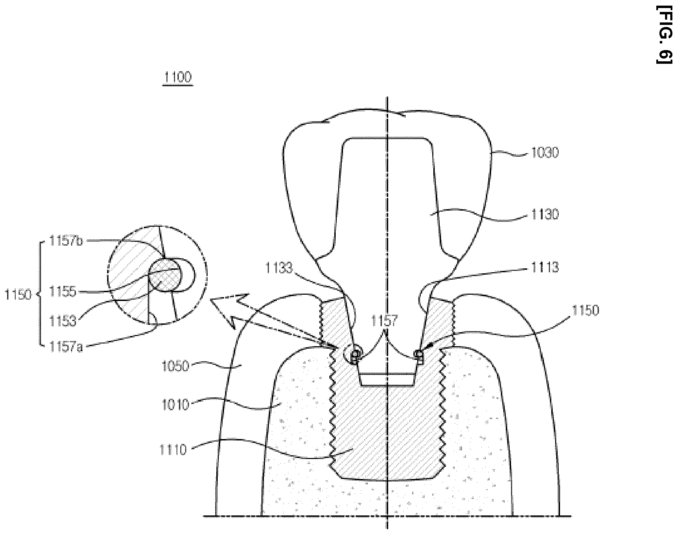

As shown in FIGS. 6 to 8d, an implant device 1100 according to a fourth exemplary embodiment includes a fixture 1110 that is coupled to an alveolar bone 1010; an abutment 1130 that is coupled to the fixture 1110 wherein the fixture 1110 and the abutment 1130 are contacted and coupled to each other at a coupling part 1113 and a latching part 1133; and an elastic part 1150 that is provided to be movable between a coupling position, in which one side of the elastic part 1150 is coupled to the coupling part 1113 and the other side thereof is coupled to the latching part 1133, thereby maintaining a coupled state between the fixture 1110 and the abutment 1130, and a deformation position which is moved to either one of the coupling part 1113 and the latching part 1133 due to elastic deformation when the fixture 1110 and the abutment 1130 are separated from each other.

Further, the elastic part 1150 includes an elastic member 1153 including a coil spring, which will be described later, that is capable of being elastically deformed, and the elastic member 1153 is configured not to be elastically deformed in a vertical direction but to be elastically deformed in a horizontal direction by a force that is exerted vertically on the abutment 1130.

One side of the abutment 1130 includes the latching part 1133, a shape of which corresponds to the coupling part 1113, so as to be interlocked and coupled to the coupling part 1113, and the other side thereof is coupled to a dental prosthesis 1030.

The fixture 1110 and the abutment 1130 are contacted and coupled to each other by the elastic part 1150 in portions where the coupling part 1113 and the latching part 1133 are provided.

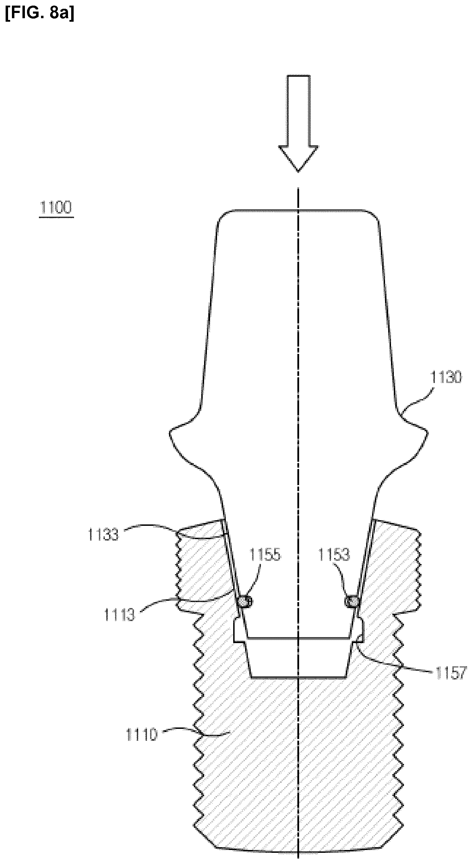

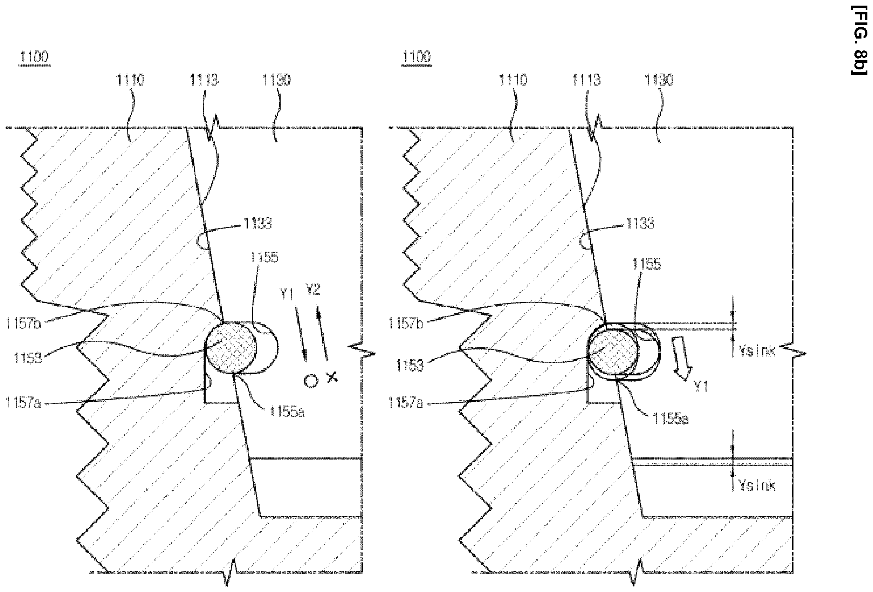

It is desirable that the elastic part 1150 is coupled to the latching part 1133 and the coupling part 1113 not only to maintain the coupling position (refer to FIGS. 6 and 8b) in one of the latching part 1133 and the coupling part 1113, but also to maintain the deformation position (FIGS. 8a to 8d) in the other of the latching part 1133 and the coupling part 1113.

The elastic part 1150 includes the elastic member 1153 that is capable of being deformed; an elastic member coupling groove 1155 that is formed to be grooved, that is to say recessed, so as for one side of the elastic member 1153 to be coupled to one of the coupling part 1113 and the latching part 1133; and an elastic member groove 1157 that is formed to be grooved, that is to say recessed, at a position corresponding to the elastic member coupling groove 1155 at the coupling position so as for the other side of the elastic member 1153 to be coupled to the other of the coupling part 1113 and the latching part 1133. Herein, a vertical extension line of a central axis with respect to a cross section of the elastic member 1153 at a locking position is positioned at an outer side more than a latching part that is positioned at a lower side of the elastic member coupling groove 1155 or the elastic member groove 1157, such that when a greater external force is exerted on the abutment 1130 in comparison with a target coupling force that is set for the abutment 1130 and the fixture 1110 to be locked each other at the coupling position, the elastic member 1153 is elastically deformed and moved to either one of the elastic member coupling groove 1155 and the elastic member groove 1157. Accordingly, the abutment 1130 is desirably separated from the fixture 1110.

As shown in FIGS. 6 to 8d, the elastic member coupling groove 1155 is formed to be grooved at the latching part 1133 of the abutment 1130, and the elastic member groove 1157 is formed to be grooved in the coupling part 1113 of the fixture 1110 at the position corresponding to the elastic member coupling groove 1155. Hereinafter, the elastic member coupling groove 1155 and the elastic member groove 1157 will now be described in detail with references to FIGS. 6 to 8d.

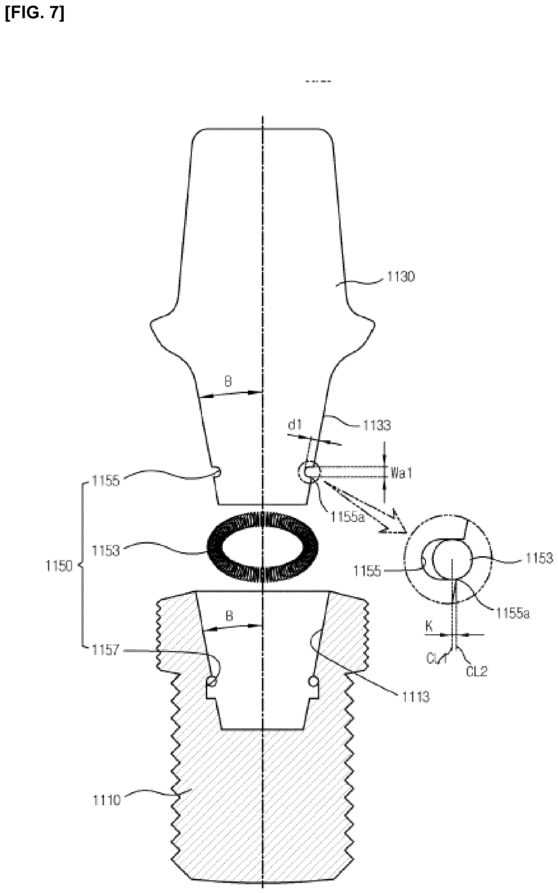

The elastic member 1153 may include various shapes that are capable of being elastically deformed. For example, a ring-shaped spring may be desirably provided therein. The ring-shape spring is referred to as a coil spring, and, as partly illustrated in FIG. 7, may be formed as a ring or loop shape.

Here, the elastic member 1153 may include a ring shape, elastically deformable, that is formed by cutting a portion of a normal rod shape. However, the elastic member 1153 having the ring shape composed of the aforementioned spring is much lighter than the ring shape based upon the rod shape, and further, in consideration of a special material to be used for a human body, is much easier to be produced and advantageous to control an elastic force with respect to elastic deformation, thereby making it possible to improve economic efficiency and stability.

Further, as illustrated in FIG. 7, the elastic member 1153, which will be described later, may be provided with an oval cross section.

Further, an outer diameter of the spring to be used for the elastic member 1153, a wire diameter thereof, a pitch thereof, a depth of the elastic member coupling groove 1155, and the like may be selectable depending on the target coupling force at the coupling position where the abutment 1130 is coupled to the fixture 1110, thereby having an advantage of widening application scope thereof.

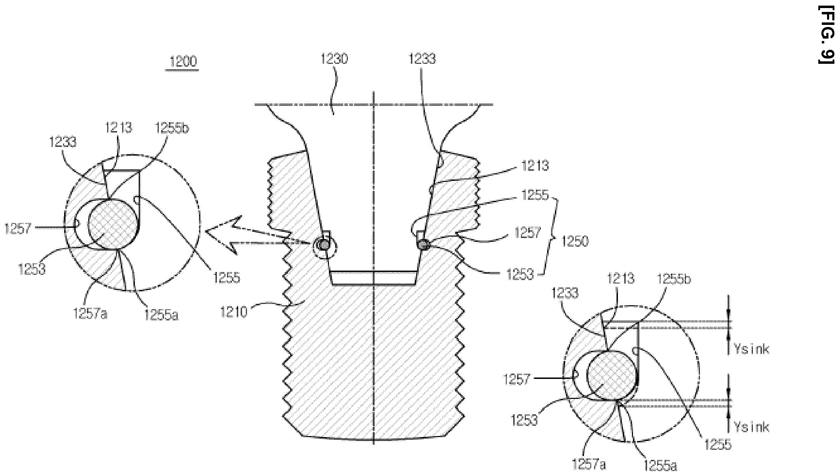

Additionally, it is desirable that the ring-shaped spring to be used for the elastic member 1153 is elastically deformable in a direction of expansion towards an outer diameter side (refer to FIGS. 6 to 8d), or in a direction of contraction towards an inner diameter side (refer to FIG. 9), which will be described later according to another exemplary embodiment, The aforementioned directions of the elastic deformation may be equally applied to the elastic member 1153 having the ring shape based upon the rod shape.

The elastic member coupling groove 1155 is formed to accommodate an outer side of the elastic member 1153 so as to maintain a coupled state of the elastic member 1153 at the coupling position, and a shape thereof is formed to be grooved, that is to say recessed, to correspond to a shape of the elastic member 1153. A depth of the elastic member coupling groove 1155 (refer to d1 in FIG. 7) is desirably formed to correspond to a diameter of the elastic member 1153 so as to accommodate the elastic member 1153. In other words, the elastic member coupling groove 1155 is formed to accommodate a minimum area of the elastic member 1153 at the coupling position where the elastic member 1153 is coupled thereto. Further, the elastic member coupling groove 1155 is formed to accommodate a maximum area of the elastic member 1153 in a process of coupling the abutment 1130 to the fixture 1110 or separating the abutment 1130 from the fixture 1110.

Additionally, a width of an input side with respect to the elastic member coupling groove 1155 (refer to Wa1 in FIG. 7) is desirably formed to have a size through which a diameter of the elastic member 1153 (refer to "d" in FIG. 7) can pass.

Here, the elastic member groove 1157 is formed to be coupled to the elastic member 1153 at the coupling position, thereby having a function of maintaining the coupling position where the elastic member 1153 is coupled to the abutment 1130 and the fixture 1110.

The elastic member groove 1157 is formed to have an upper groove latch 1157b at an upper side of an input side, and to have a groove wall 1157a, a shape of which is a vertical wall, that is formed to be grooved to correspond to the shape of the elastic member 1153 and then formed to extend in a vertical direction with a constant length.

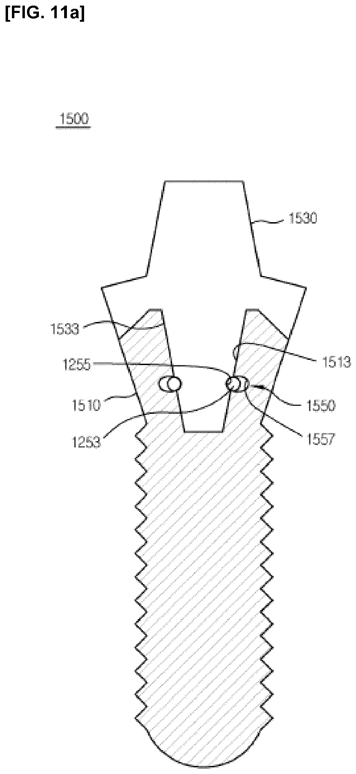

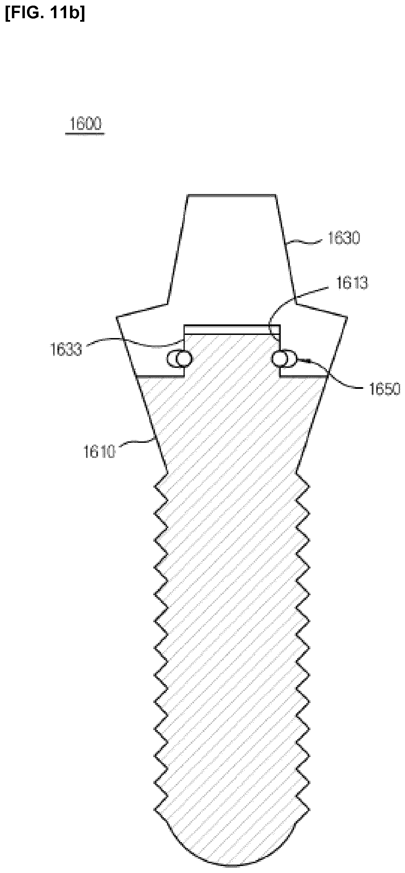

When a vertical force such as an occlusal force is exerted on the dental prosthesis 1030 after the abutment 1130 is coupled to the fixture 1110, a force is exerted between the coupling part 1113 and the latching part 1133, and thus consequently the abutment 1130 and the fixture 1110 are more closely adhered to each other by ductlity of the fixture 1110, such that the groove wall 1157a may secure a space in which the abutment 1130 slightly sinks deeper towards the fixture1110, that is to say a sinking action occurs, due to the occlusal force. The sinking action mainly occurs in the case of a conical interface in which the coupling part 1113 and the latching part 1133 are formed to have a inclined shape (refer to FIGS. 6 to 9, 12, 13a, and 13b). In contrast, it is desirable that the sinking action may not occur in the case of a flat-to-flat interface in which two flat surfaces are coupled to each other (refer to FIGS. 11a and 11b).

Specifically, as shown in an enlarged cross-sectional view of FIG. 7, a vertical extension line of a central axis of the elastic member 1153 (refer to CL1 in FIG. 7) is positioned at an outer side of the elastic member coupling groove 1155 more than a vertical extension line of a lower groove latch 1155a (refer to CL2 in FIG. 7), which is a latch at a lower side of an input side of the elastic member coupling groove 1155, such that CL1 and CL2 are spaced apart from each other (refer to K in FIG. 7). According to the configuration described above, the elastic member 1153 is coupled to the elastic member coupling groove 1155 and the elastic member groove 1157, and further the elastic member 1153 is capable of being elastically deformed by an external force so as to be positioned at a deformation position. In other words, when the external force is exerted in the exemplary embodiment, the elastic member 1153, which is accommodated in the elastic member groove 1157, is pushed towards an inner side of the elastic member coupling groove 1155 (that is to say a diameter of the elastic member 1153 becomes small in a radius direction of a ring shape), and gradually moves towards the elastic member coupling groove 1155, after which the abutment 1130 is able to be separated from the fixture 1110.

In consideration of the target coupling force, by which the abutment 1130 is coupled to the fixture 1110 at the coupling position and the locking position therebetween is maintained, it is desirable to select an angle of inclination (refer to B in FIG. 7) between the coupling part 1113 and the latching part 1133 and accuracy therebetween, a material of the elastic member 1153, a diameter thereof, a cross-sectional shape thereof, a diameter of the ring, and the like.

A reference numeral 1050, not described herein, represents a gum.

A coupling process of the implant device 1100, provided with the above-mentioned configuration, will now be described with references to FIGS. 8a and 8b.

As shown in FIG. 8a, the abutment 1130 is pressurized to be coupled to the fixture 1110 in a state where the fixture 1110 is implanted to the alveolar bone 1010 and the elastic member 1153 stays coupled to the elastic member coupling groove 1155.

The elastic member 1153 having the ring shape contacts the latching part 1133 by the aforementioned pressurized force and then becomes shrunk to move towards the inner side of the elastic member coupling groove 1155. In this case, when the latching part 1133 and the coupling part 1113 are contacted to each other by further pressurizing the abutment downwards, the elastic member coupling groove 1155 and the elastic member groove 1157 are positioned at the coupling position, after which the elastic member 1153 makes a clicking sound by an elastic force having a tendency to extend towards an outer side of the elastic member 1153 and maintains a coupled state therebetween as showin in FIG. 8b, whereby the abutment 1130 is desirably coupled to the fixture 1110 while maintaing the coupling position.

As shown in FIG. 8b, when an external force that is lower than a predetermined target coupling force (refer to Y2 in FIG. 8b) is exerted at the coupling position, the coupled state therebetween can be maintained. Meanwhile, when a user masticates his/her food whereby an occlusal force (refer to Y1 in FIG. 8b) is exerted on the abutment 1130, the occlusal force is exerted for the coupling part 1113 and the latching part 1133 to be contacted to each other. In this case, the fixture 1110 composed of a rigid body has the ductility and thus may cause a slight space, such that the abutment 1130 or the dental prosthesis 1030 may sink slightly deeper towards the fixture 1110 due to a slight movement, that is to say the sinking action occurs. Accordingly, the present disclosure provides the elastic part 1150 having an effect of maintaining the above-mentioned sinking action.

In other words, according to the exemplary embodiment, with respect to a space between the tapered coupling part 1113 and the latching part 1133, the coupling part 1113 having the ductility may have more space due to the repeated above-mentioned occlusal force, whereby the coupling part 1113 and the latching part 1133 are more adhered to each other, such that the abutment 1130 sinks slightly deeper towards the fixture 1110, that is to say the sinking action or sinking state occurs. In this case, forces that are capable of maintaining the sinking state may be both an elastic force occurring at the elastic part 1150 that is horizontally exerted on the elastic member coupling groove 1155 or elastic member groove 1157, and a coupling force generated by friction occurring between the coupling part 1113 and the latching part 1133.

Here, a portion that is marked with a solid line of the elastic member coupling groove 1155 in FIG. 8b is the coupling position at which the elastic member 1153 becomes shrunk towards the elastic member coupling groove 1155 and makes the clicking sound at the elastic member groove 1157 in the coupling process between the abutment 1130 and the fixture 1110. Further, when a vertical force is exerted on the fixture 1110 from the abutment 1130 due to external forces such as the occlusal force, and the like, the fixture 1110 and the abutment 1130 become more closely adhered to each other, such that the abutment 1130 sinks slightly deeper in a downward direction, that is to say the sinking action occurs, and a position where the sinking action occurs is referred to as a sinking position. In this case, the sinking position is marked with a dotted line and a difference between the coupling position and the sinking position is described as Ysink in FIG. 8b.

Meanwhile, as described hereinafter, the coupling part and latching part are not tapered shapes in FIGS. 8a and 8b, such that the coupling force generated by the friction occurring between the two tapered shapes may not occur. In other words, the sinking action described above may occur or may not occur, depending on a method type by which the abutment 1130 and the fixture 1110 are coupled to each other, or a structure type such as a submerged type, which will be described later.

In other words, contrary to a conventional technology, the present disclosure does not use a bolt for a coupling process but use the elastic part therefor, and a shock-absorbing action does not occur, such that the abutment and the fixture relatively do not move and are able to maintain a coupled state in a state where a coupling surface of the fixture and a coupling surface of the abutment are contacted and coupled to each other. Accordingly, the present disclosure makes it advantageously possible to prevent various problems such as decay, infection, and the like, all of which are caused by bacteria, a virus, a foreign substance, etc. that may get stuck at a gap occurring when a movement occurs due to the shock-absorbing action, and the like or may be positioned between sliding surfaces (or a space between the coupling part and the latching part in the present disclosure).

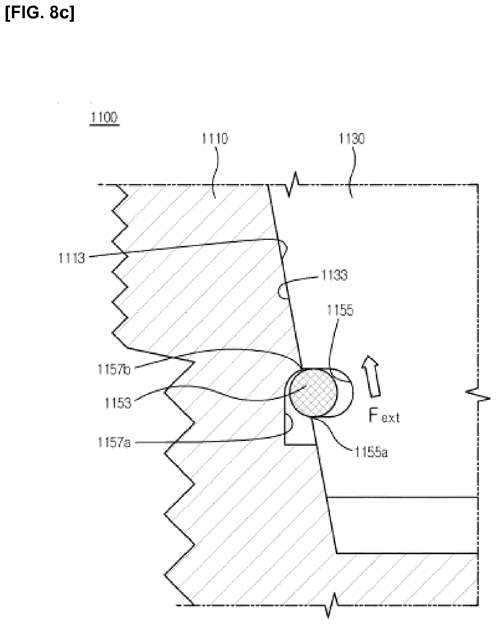

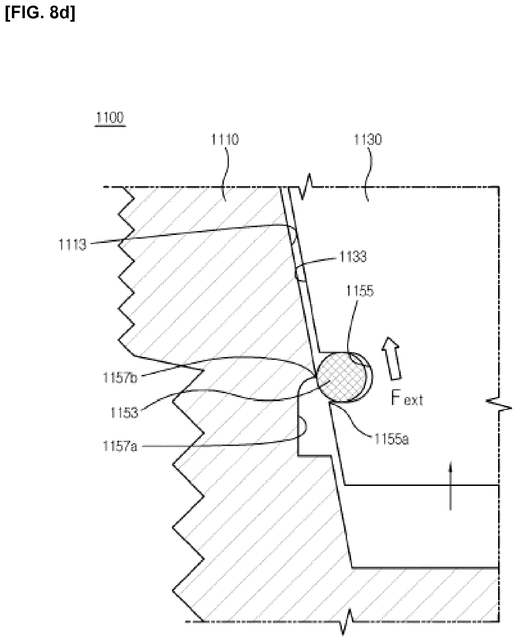

Further, a separation process of the implant device 1100 according to the present disclosure will now be described with references to FIGS. 8c and 8d.

First, when a separable force that is equal to or greater than a target coupling force (refer to F-ext in FIGS. 8c and 8d) is exerted, the lower groove latch 1155a, which is the latch at the lower side of the elastic member coupling groove 1155, pressurizes the elastic member 1153, whereby the elastic member 1153, as shown in FIG. 8d, moves along a circle shape of an upper side of the elastic member groove 1157 and then moves towards the inner side of the elastic member coupling groove 1155.

Accordingly, as shown in FIG. 8d, the elastic member 1153 moves to be accommodated in the elastic member coupling groove 1155, such that the abutment 1130 can be separated from the fixture 1110.

According to the exemplary embodiment, the present disclosure provides an easily retrievable implant-abutment device that is not only capable of maintaining a coupled position in a state where an abutment is coupled to a fixture, but also capable of allowing a slight movement under a predetermined external force (that is to say when a force, lower than a predetermined external force, is exerted) occurring due to an occlusal force of occluding teeth, and further in which, as necessary, the abutment is able to be separated from the fixture when an external force that is equal to or greater than a target coupling force for maintaining a coupled state therebetween is exerted.

Additionally, it is advantageously possible to provide the easily retrievable implant-abutment device, a structure of which is simplified, that is not only capable of saving components and improving economic efficiency, but also capable of easily replacing an implant dental prosthesis, thereby having an effect of improving convenience and reliability for a patient and/or a surgeon.

Further, it is advantageously possible to provide the easily retrievable implant-abutment device that is capable of maintaining the coupled state and preventing a movement between the fixture and the abutment occurring due to a shock-absorbing action, thereby having an advantage of preventing bacteria, germs, and the like from being stuck or being propagated between the abutment and the fixture.

### Fifth Exemplary Embodiment

According to yet another exemplary embodiment of the present disclosure, an implant device 1200 will now be described in detail with reference to FIG. 9.

According to a fifth exemplary embodiment, an elastic member groove 1257, to which an elastic member 1253 is elastically and deformably coupled, is formed in a fixture 1210. Further, an elastic member coupling groove 1255 formed in an abutment 1230 is provided in a vertical direction and the elastic member 1253 is accommodated in the elastic member coupling groove 1255, thereby maintaining a coupled state of the elastic member 1253 at a coupling position and separating the abutment 1230 from the fixture 1210 at a deformation position. That is, the elastic member 1253 has a tendency to be shrunk and elastically deformed towards an inner side thereof. In other words, the elastic member 1253 according to the present disclosure is not deformed in an up-and-down direction or a vertical direction but deformed in a left-and-right direction or a horizontal direction. Specifically, the up-and-down direction or the vertical direction represents a direction in which the abutment is separated from the fixture or coupled to the fixture.

As described above, a coupling position and a sinking position according to the exemplary embodiment will now be described in detail with reference to an enlarged draw in FIG. 8b.

Here, a portion that is marked with a solid line of the elastic member coupling groove 1255 in FIG. 9 is a coupling position at which the elastic member 1253 becomes shrunk towards the elastic member coupling groove 1257 and makes a clicking sound at the elastic member coupling groove 1257 in a coupling process between the abutment 1230 and the fixture 1210. Further, when a vertical force is exerted on the fixture 1210 from the abutment 1230 due to external forces such as an occlusal force, and the like, the fixture 1210 and the abutment 1230 are more closely adhered to each other such that the abutment 1230 sinks slightly deeper in a downward direction, that is to say a sinking action occurs, and a position where the sinking action occurs is referred to as a sinking position. In this case, the sinking position is marked with a dotted line and a difference between the coupling position and the sinking position is described as Ysink in FIG. 9.

Functions, effects, actions, and the like of respective configurations except the configurations and positions described above in the fifth exemplary embodiment are the same as those in the exemplary embodiments described hereinabove, so detailed descriptions thereof will be omitted.

### Sixth Exemplary Embodiment

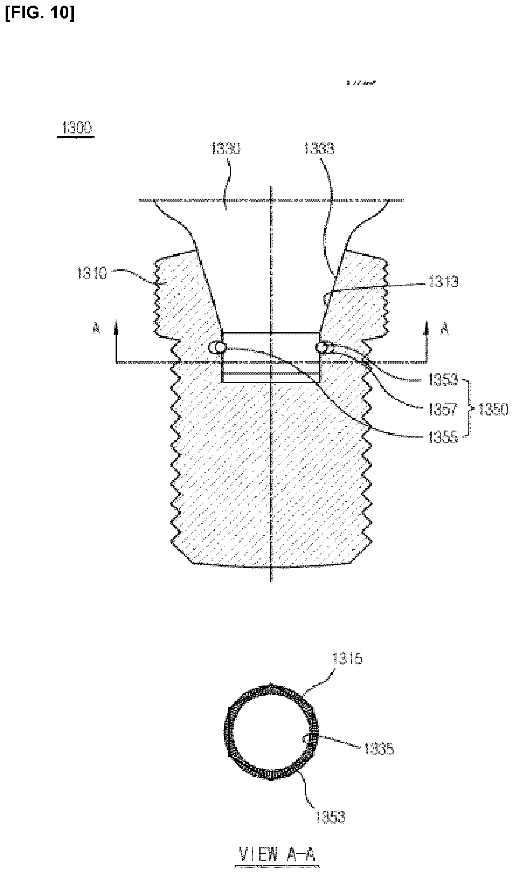

As shown in FIG. 10, an implant device 1300 according to even another exemplary embodiment of the present disclosure further includes rotation preventing parts 1315 and 1335 having hexagonal cross sections that are formed in portions where a coupling part 1313 and a latching part 1333 are provided or in portions extended from the portions where the coupling part 1313 and the latching part 1333 are provided so as to inhibit up-and-down rotation in a state where an abutment is coupled to a fixture, and an elastic part 1350 is formed in the rotation preventing parts 1315 and 1335. Functions, effects, actions, and the like of respective configurations except the rotation prevention parts 1315 and 1335, and the elastic part 1350 in the sixth exemplary embodiment are the same as those in the exemplary embodiments described hereinabove, so detailed descriptions thereof will be omitted.

### Seventh Exemplary Embodiment

Meanwhile, the implant devices 1100, 1200, and 1300 and an implant device, which will be described later, are desirably provided with various coupling methods, by which the abutment and the fixture are coupled to each other, such as a submerged type (not shown), an internal submerged type shown in FIG. 11a, and an external type shown in FIG. 11b.

As described above, referring to FIGS. 6 to 9, the abutment sinks slightly deeper towards the fixture due to the additionally exerted external force at the coupling position, that is to say the sinking action occurs. Meanwhile, referring to FIGS. 11a and 11b, the coupled state therebetween is maintained at the coupling position, and, contrary to the exemplary embodiments described hereinabove, abutments 1530 and 1630, and fixtures 1510 and 1610 are provided with tapered shapes at portions where the coupling part and the latching part are contacted and cold coupled to each other, such that a cold welding state does not occur.

Functions, effects, actions, and the like of respective configurations except the aforementioned differences in the seventh exemplary embodiment are the same as those in the exemplary embodiments described hereinabove, so detailed descriptions thereof will be omitted.

### Eighth Exemplary Embodiment

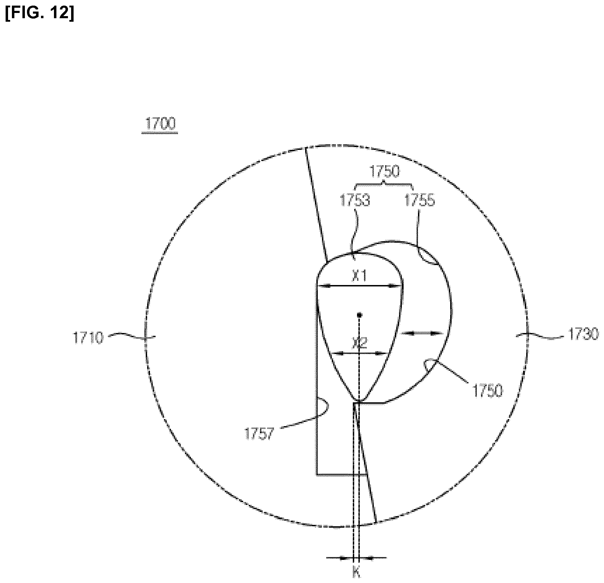

Referring to FIG. 12, an implant device 1700 according to still another exemplary embodiment of the present disclosure is illustrated and an elastic member 1753, a cross section of which has a teardrop shape, is described.

The teardrop shape, which is deformed shape from an oval shape, has a plurality of advantages in that a structure thereof is provided with a high coupling force and is rather difficult to be retrievable, that is to say difficult to be removable or detachable, thereby having effects of maintaining a coupling position, and of increasing a coupling force between an abutment and a fixture and an external force for separating the abutment from the fixture in comparison with a circle or oval shape, and the like.

In other words, the teardrop shape has characteristics in that a sharp portion of the elastic member 1753 of an elastic part 1750 (refer to X2 in FIG. 12) is positioned at a lower side in a coupling process between an abutment 1730 and an fixture 1710, such that the coupling process is easily performed, and when the abutment 1730 and the fixture 1710 are separated from each other, the elastic member 1753 is elastically deformed by a separation distance (refer to K in FIG. 12), and a high frictional force may be exerted at an upper side of the elastic member 1753 having not a sharp portion (refer to K1 in FIG. 12) in this process. That is, the teardrop shape, the lower side of which is sharp, is provided in consideration of a shape in which the lower side is sharper than the upper side.

Here, a cross section of the elastic member 1753 in the exemplary embodiment is not a circle shape or an oval shape, but may be provided with various round shapes without departing from the spirit and scope of the present disclosure.

### Ninth Exemplary Embodiment

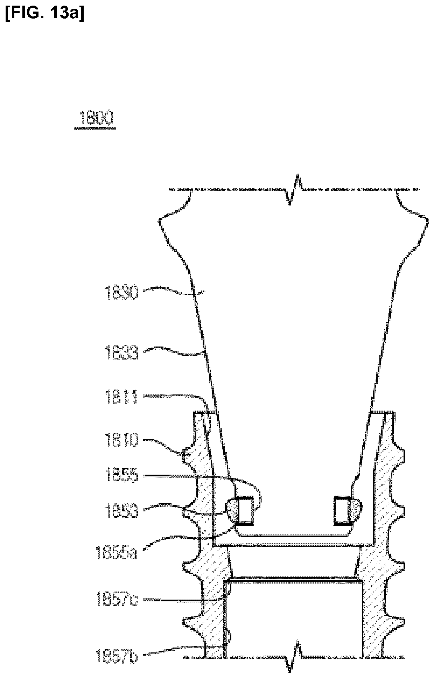

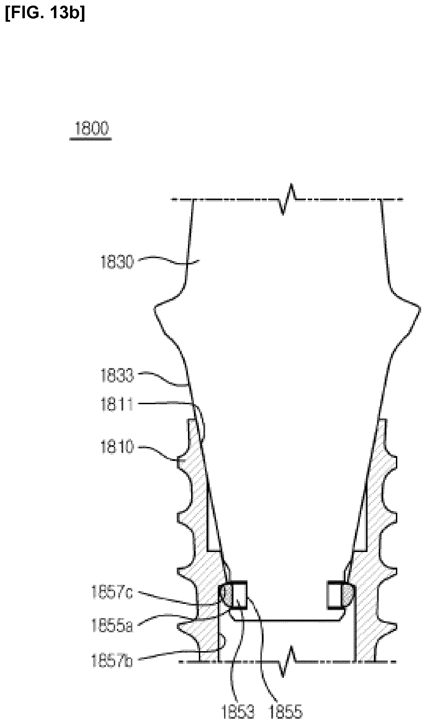

As shown in FIGS. 13a and 13b, an implant device 1800 according to far another exemplary embodiment includes an elastic member 1853, a shape of which is irregular.

FIG. 13a is a cross-sectional view illustrating a coupling process between a fixture 1810 and an abutment 1830, and FIG. 13b is a cross-sectional view illustrating a coupled state in which the abutment 1830 is coupled to the fixture 1810.

Contrary to the exemplary embodiments described above, a ninth exemplary embodiment provides the elastic member 1853, a cross-sectional shape of which is an irregular circle shape, more specifically, a lower side of an outer side has a slightly sharp oval shape, and an upper side of the outer side has an oval shape which is not less sharp than that of the lower side thereof. Further, an inner side is formed to partly have a circular arc shape having a big radius of curvature or to have an almost flat structure. Functions, effects, and the like except the differences described above in the ninth exemplary embodiment are the same as those in the exemplary embodiments described hereinabove, so detailed descriptions thereof will be omitted.

As described in the exemplary embodiments, a groove side 1857c, which is provided at an upper part of an elastic member groove 1857, is formed to correspond to a shape of the elastic member 1853 and thus to be a circular shape towards an outer side from an inner side.

### Tenth Exemplary Embodiment

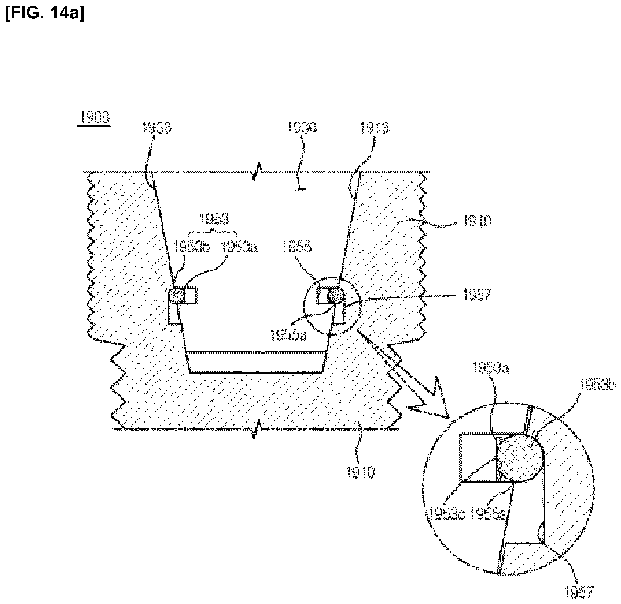

Implant devices 1900 and 1950' according to yet another exemplary embodiment will now be described with references to FIGS. 14a and 15.

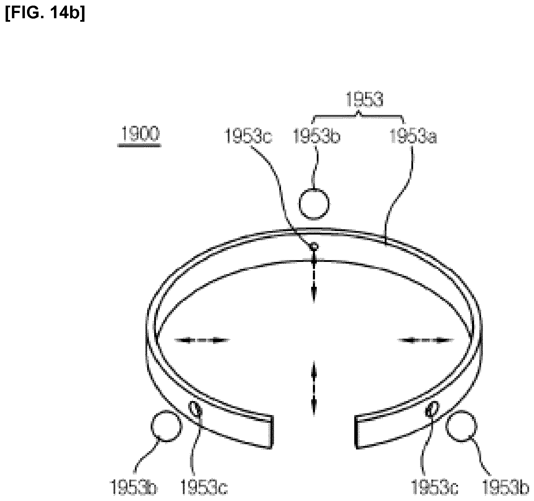

Referring to FIGS. 14a and 14b, the implant device 1900 includes an elastic part 1953 that is provided to be elastically and deformably coupled to a coupling part 1913 or a latching part 1933, thereby inhibiting a movement of an abutment 1930 with respect to a fixture 1910 and maintaining a coupled state between the abutment 1930 and the fixture 1910, wherein the fixture 1910 and the abutment 1930 are contacted and coupled to each other at the coupling part 1913 and the latching part 1933, and the elastic part 1950 includes a plate spring 1953a that is elastically and deformably coupled to either one of the coupling part 1913 and the latching part 1933; and a position maintaining means 1953b including a ball, provided in plural, that is coupled to the coupling part 1913 and the latching part 1933 to be removable, that is to say retrievable, on a circumference of the plate spring 1953a.

In other words, the plate spring 1953a, one portion of which is partially opened on the circumference, is elastically deformed in the elastic part 1953. Further, provided are the position maintaining means 1953b including spherical balls that are retrievably, that is to say removably, coupled to portions equally disposed on the circumference of the plate spring 1953a. Herein, ball seat members 1953c, which are formed by penetration or include a grooved or recessed shape (not shown), are provided on the circumference of the plate spring 1953a so as to maintain positions of the position maintaining means 1953b. In this case, a plurality of the spherical balls are provided, for example, 3 to 5 spherical balls may be desirably provided.

As described above, the elastic part 1953 is provided with an elastic member groove 1957 so as for the ball to be coupled to the coupling part 1913 formed in the fixture 1910, and the latching part 1933 formed in the abutment 1930 is provided with an elastic member coupling groove 1955 having a space in which the position maintaining means 1953b and the plate spring 1953a are coupled to each other and the plate spring 1953a is elastically deformable. A reference numeral 1955a denotes a lower groove latch, which is a latch at a lower side of an input side of the elastic member coupling groove 1155.

As described above, according to the exemplary embodiment shown in FIGS. 14a and 14b, the plate spring 1953a has a tendency to be elastically deformed towards an outer side, and the position maintaining means 1953b is coupled to the outer side of the plate spring 1953a.

Meanwhile, as shown in FIG. 15, an implant device 1950' according to even another embodiment of the present disclosure is provided with a plate spring 1953a' having a tendency to be elastically deformed towards an inner side, and a position maintaining means 1953b' having a spherical ball is coupled to the inner side of the plate spring 1953a'. Reference numerals of FIG. 15 are described by adding a symbol " 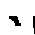 " to the reference numeral in FIGS. 14a and 14b. Functions, effects, and the like except the differences described above in the tenth exemplary embodiment are the same as those in the exemplary embodiments described hereinabove, so detailed descriptions thereof will be omitted.

According to the configuration described above, it is advantageously possible not only to have a simplified structure, but also to conveniently perform production, assembly, repair, and the like, thereby improving economic efficiency.

According to exemplary embodiments described above, the present disclosure provides an easily retrievable implant-abutment device that is not only capable of maintaining a coupled position in a state where an abutment is coupled to a fixture, but also capable of allowing a slight movement under a predetermined external force occurring due to an occlusal force of occluding teeth, and further in which, as necessary, the abutment is able to be separated from the fixture when an external force that is equal to or greater than a target coupling force for maintaining a coupled state therebetween is exerted

Additionally, it is advantageously possible to provide the easily retrievable implant-abutment device, the structure of which is simplified, that is not only capable of saving components and improving economic efficiency, but also capable of easily replacing an implant dental prosthesis, thereby having an effect of improving convenience and reliability for a patient and/or a surgeon.

Further, it is advantageously possible to provide the easily retrievable implant-abutment device that is capable of maintaining the coupled state and preventing movement between the fixture and abutment due to a shock-absorbing action, thereby having an advantage of preventing bacteria, germs, and the like from being stuck or being propagated between the abutment and the fixture.

While the present disclosure has been described in connection with what is presently considered to be practical exemplary embodiments, it is to be understood that the present disclosure is not limited to the disclosed embodiments, but, on the contrary, is intended to cover various modifications and equivalent arrangements included within the spirit and scoop of the appended claims. Accordingly, the scoop of the present disclosure shall be determined only according to the attached claims.

### <Description of symbols>

100,1100 : implant device
10, 1010 : alveolar bone
30, 1030 : dental prosthesis
50, 1050 : gum
110, 1110 : fixture
113 : female tapered part
115, 1315 : rotation preventing part
130, 1130 : abutment
133, 1133 : male tapered part
135, 1335 : rotation preventing part
150, 1150 : elastic part
153, 1153 : elastic member
155, 1155 : elastic member coupling groove
155a : groove latch

## Claims

1. An elastically coupled implant-abutment device, comprising:
a fixture that is coupled to an alveolar bone and includes a female tapered part having a tapered shape on an inner side thereof;
an abutment, one side of which includes a male tapered part corresponding to a shape of the female tapered part so as to be interlocked and coupled to the female tapered part, and, the other side of which is coupled to a dental prosthesis; and
an elastic part that is provided between the female tapered part and the male tapered part so as for the abutment to be movable between a locking position, in which the abutment stays coupled to the fixture and is inhibited from moving away from the alveolar bone, and a sinking position, in which the abutment moves and sinks towards the alveolar bone by an occlusal force of occluding teeth.

2. The elastically coupled implant-abutment device according to claim 1,
wherein the elastic part includes an elastic member, a shape of which is elastically deformable in a coupling process between the fixture and the abutment; an elastic member coupling groove that is formed so as for the elastic member to be elastically and deformably coupled to one of the female tapered part and the male tapered part; and an elastic member groove that is formed in the other of the female tapered part and the male tapered part so as for the elastic member to be movable between the locking position and the sinking position.

3. The elastically coupled implant-abutment device according to claim 2,
wherein the elastic member includes a ring shape.

4. The elastically coupled implant-abutment device according to claim 1, comprising:
rotation preventing parts that are formed in portions where the female tapered part and the male tapered part are provided or in portions extended from the portions where the female tapered part and the male tapered part are provided so as to inhibit rotation in a state where the abutment is coupled to the fixture.

5. An elastically coupled implant-abutment device, comprising:
a fixture that is coupled to an alveolar bone and includes a female tapered part having a tapered shape on an inner side thereof;
an abutment, one side of which includes a male tapered part corresponding to a shape of the female tapered part so as to be interlocked and coupled to the female tapered part, and, the other side of which is coupled to a dental prosthesis;
rotation preventing parts that are formed in portions where the female tapered part and the male tapered part are provided or in portions extended from the portions where the female tapered part and the male tapered part are provided so as to inhibit rotation in a state where the abutment is coupled to the fixture; and
an elastic part that is provided between the female tapered part and the male tapered part so as for the abutment to be movable between a locking position, in which the abutment stays coupled to the fixture and is inhibited from moving away from the alveolar bone, and a sinking position, in which the abutment moves and sinks towards the alveolar bone by an occlusal force of occluding teeth.

6. An implant-abutment device including a fixture that is coupled to an alveolar bone and an abutment that is coupled to the fixture, comprising:
an elastic part that is provided to be elastically and deformably coupled to a coupling part or a latching part, thereby inhibiting a movement of the abutment with respect to the fixture and maintaining a coupled state between the abutment and the fixture,
wherein the fixture and the abutment are contacted and coupled to each other at the coupling part and the latching part.

7. The implant-abutment device according to claim 6,
wherein a tapered shape is provided in a portion where the coupling part and the latching part are contacted to each other, and the elastic part is provided to maintain a sinking state in which the elastic part sinks slightly deeper in a downward direction when a force, by which the abutment is more closely adhered to the fixture, is exerted.

8. The implant-abutment device according to either one of claims 6 and 7,
wherein the elastic part includes an elastic member that is capable of being elastically deformed, and the elastic member is configured not to be elastically deformed in a vertical direction, but to be elastically deformed in a horizontal direction by a force that is vertically exerted on the abutment.

9. The implant-abutment device according to claim 8,
wherein the elastic member includes a ring-shaped spring (a coil spring).

10. The implant-abutment device according to claim 8,
wherein the elastic member includes an elastically deformable shape (a "C" shape) that is formed in such a manner that a ring shape is partly cut.

11. The implant-abutment device according to claims 9 and 10,
wherein a cross section of the elastic member includes a circle shape, an oval shape, a teardrop shape or an irregular circle shape.

12. The implant-abutment device according to claim 6,
wherein s a plurality of coupling types, by which the abutment is coupled to the fixture, include a submerged type, an internal submerged type, and an external type.

13. An implant-abutment device including a fixture that is coupled to an alveolar bone and an abutment that is coupled to the fixture, comprising:
an elastic part that is provided to be elastically and deformably coupled to a coupling part or a latching part, thereby inhibiting a movement of the abutment with respect to the fixture and maintaining a coupled state between the abutment and the fixture,
wherein the fixture and the abutment are contacted and coupled to each other at the coupling part and the latching part, and
the elastic part includes a coil spring having a ring shape that is provided to be elastically and deformably coupled to the coupling part and the latching part.

14. An implant-abutment device including a fixture that is coupled to an alveolar bone and an abutment that is coupled to the fixture, comprisig:
an elastic part that is provided to be elastically and deformably coupled to a coupling part or a latching part, thereby inhibiting a movement of the abutment with respect to the fixture and maintaining a coupled state between the abutment and the fixture,
wherein the fixture and the abutment are contacted and coupled to each other at the coupling part and the latching part, and
the elastic part includes a plate spring that is elastically and deformably coupled to either one of the coupling part and the latching part; and a position maintaining means, provided in plural, including a ball that is coupled to the coupling part and the latching part to be retrievable on a circumference of the plate spring.
